# EUROPÄISCHE PATENTSCHRIFT

(11) **EP 3 132 993 B1**
(45) Veröffentlichungstag und Bekanntmachung des Hinweises auf die Patenterteilung: **05.08.2020**
(21) Anmeldenummer: 15002488.3
(22) Anmeldetag: 21.08.2015
(51) Int. Cl.: B62C 3/00, B62D 63/06

(54) **VERKLEINERBARE KUTSCHENSTRUKTUR MIT FALTMECHANISMUS ZUR TRANSPORTVEREINFACHUNG**
COLLAPSIBLE CARRIAGE STRUCTURE WITH FOLDING MECAHNISM FOR TRANSPORT EASYING
STRUCTURE DE CALECHE PERMETTANT UNE REDUCTION EN TAILLE A L'AIDE D'UN MECHANSIME DE PLIAGE POUR FACILITER SON TRANSPORT

(43) Veröffentlichungstag der Anmeldung: 22.02.2017
(60) Teilanmeldung: 17192348.5
(73) Patentinhaber: Wührmann, Heiko, 27321 Thedinghausen (DE)
(72) Erfinder: Wührmann, Heiko, 27321 Thedinghausen (DE)
(74) Vertreter: Rehmann, Thorsten

(56) Entgegenhaltungen:
- DE-U1- 20 307 523
- FR-A1- 2 913 944
- NL-C2- 1 022 476
- US-A- 1 336 645
- US-A- 3 979 133
- US-A1- 2007 145 717

## Beschreibung

Die Erfindung betrifft eine Kutsche mit einem Fahrgestell, einem auf dem Fahrgestell angeordneten Aufbau, einer Deichsel und zwei Paar am Fahrgestell angeordneter Räder, die jeweils in einer Spurweite zueinander beabstandet sind.

Eine solche Kutsche ist beispielsweise aus der DE 20 2004 016 528 U1 oder der US 1,336,645 A bekannt. Kutschen werden von einem Pferd gezogen. Während Kutschen vor der Automobilisierung notwendige Transportmittel für den Landweg waren, werden sie heute nur noch als Freizeitfahrzeuge verwendet. Sollen Kutsche und Pferd von einem Ort zum anderen, beispielsweise zu einem Turnier oder zum Urlaubsort, transportiert werden, so ist dies mit einem nicht unerheblichen Aufwand verbunden. In der Regel werden hierzu zwei Zugfahrzeuge mit Anhängern benötigt, wobei ein Anhänger das Pferd und der andere Anhänger die Kutsche transportiert oder es wird ein entsprechend großer LKW benötigt, der Pferd und Kutsche gemeinsam transportieren kann.

Aus der DE 20 2012 003 357 U1 ist eine einachsige Pferdekutsche mit einem einklappbaren Fahrgestell bekannt, die in das freie Abteil neben einem Pferd in einem Zweier-Pferdeanhänger aufgenommen werden kann. Hierzu ist vorgesehen, dass beide Radgabeln inklusive der Räder um in Längsrichtung angeordnete Schwenkachsen unter oder über den Wagenboden geschwenkt werden können. Die Schwenkachsen stellen gleichzeitig die Längsträger des Wagengestells dar. Ein solcher Klappmechanismus ist nur an einachsigen Kutschen realisierbar.

Aus der US 2007/0145717 A1 oder der US 3,979,133 A sind einachsige Fahrzeuganhänger bekannt, die parallel zur Zugrichtung faltbar ausgestaltet sind, sodass die Spurweite der beiden Räder verkleinert werden kann, um den Anhänger platzsparend lagern zu können.

Die FR 2 913 944 A1 offenbart einen Fahrzeuganhänger bei dem die Deichsel in einem Rahmen befestigt ist, der unter das Fahrgestell eingeschoben werden kann, um die Länge des Anhängers zum Zwecke der platzsparenden Lagerung verkürzen zu können.

Aus der NL 1022476 C2 ist ein faltbarer einachsiger Fahrzeuganhänger bekannt, bei dem der Boden zweiteilig ausgebildet ist und die beiden Teile jeweils nach oben schwenken, wenn der Anhänger gefaltet und die Spurweite dabei verkleinert wird.

Von dieser Problemstellung ausgehend soll die beschriebene mehrachsige Kutsche so verbessert werden, dass sie raumsparend transportiert werden kann, und insbesondere in einem Abteil eines Pferdeanhängers untergebracht werden kann.

Zur Problemlösung zeichnet sich eine gattungsgemäße Kutsche dadurch aus, dass die Spurweiten der Räder zum Transport der Kutsche verkleinerbar und unterschiedlich groß einstellbar sind und dass das Fahrgestell mehrteilig, insbesondere zweiteilig und in Fahrtrichtung teleskopierbar ausgestaltet ist.

Durch diese Ausgestaltung kann die Breite und die Länge der Kutsche zum Transport reduziert werden, sodass ihr Platzbedarf so gering ist, dass sie in einem Abteil eines Pferdeanhängers untergebracht werden kann.

Weil die Spurweiten der Achsen zum Transport der Kutsche unterschiedlich groß einstellbar sind, ist es auch möglich, das Fahrgestell in Fahrtrichtung teleskopierbar auszugestalten, sodass die Kutsche in ihrer Länge verkürzt und die Räder der beiden Achsen nicht hintereinander, sondern zumindest teilweise übereinander liegend zur Mitte des Fahrgestells hin verschwenkbar sind, sodass die Kutsche zum Transport nicht nur schmaler, sondern auch verkürzbar ist, und sie in das Abteil eines Pferdeanhängers hineinpasst.

Hierzu ist das Fahrgestell vorzugsweise zweiteilig ausgebildet und das erste Paar Räder ist an einem vorderen Teil des Fahrgestells und das zweite Paar Räder an einem hinteren Teil des Fahrgestells angeordnet.

Vorzugsweise ist jeder Lenker zusätzlich über einen lösbaren Querlenker mit dem Fahrgestell verbunden. Dadurch kann beim Betrieb der Kutsche sichergestellt werden, dass die Spurweiten der Räder sicher eingehalten werden.

Um die Breite der Kutsche insgesamt zu reduzieren besteht der Aufbau zumindest aus einem Boden, zwei Längsseiten sowie zwei Querseiten, und die Querseiten bestehen aus zwei über ein erstes Scharnier verbundenen Hälften, wobei jeweils eine der Hälften über ein zweites Scharnier schwenkbar mit einer der Längsseite verbunden ist. Dadurch können die Querseiten eingeklappt und die Längsseiten aufeinander zugeschoben werden, wenn die Räder zur Mitte des Fahrgestells angeklappt werden.

Der Boden des Aufbaus besteht vorzugsweise aus drei Teilen, von denen ein mittleres Bodenteil über ein drittes Scharnier schwenkbar mit einer der Längsseiten und ein vorderes Bodenteil über ein viertes Scharnier mit dem mittleren Bodenteil und ein hinteres Bodenteil über ein fünftes Scharnier mit dem mittleren Bodenteil verbunden ist. Zum Falten der Kutsche wird das mittlere Bodenteil hochgeschwenkt und die beiden äußeren Bodenteile an die Unterseite des mittleren Bodenteiles angelegt. Der Boden steht dann in vertikaler Richtung über die beiden Längsseiten hervor. Die Längsseiten liegen an dem zusammengefalteten Boden an.

Hierzu ist das mittlere Bodenteil vorzugsweise doppelt so groß wie die Fläche der vorderen und hinteren Bodenteile, sodass der zum Klappen des Bodens benötigte Raum minimiert wird.

Zur Reduzierung der Spurweite ist vorzugsweise jedes Rad an je einem Lenker drehbar gelagert, der um jeweils eine Hochachse schwenkbar am Fahrgestell befestigt ist. Die Räder können damit um eine Hochachse verschwenkt werden. Bei der zweiachsigen Kutsche (beispielsweise ein Buggy) können die Räder zur Mitte des Fahrgestells angeklappt werden.

Die Längsseiten sind vorzugsweise entlang eines Schlittens aufeinander verschiebbar angeordnet, damit eine Führung beim Falten der Kutsche möglich wird.

Vorzugsweise ist der Schlitten zweiteilig und besteht aus zwei nicht miteinander verbundenen Schienen, wobei der erste Schlittenteil mit dem vorderen Teil des Fahrgestells und der zweite Schlittenteil mit dem hinteren Teil des Fahrgestells verbunden ist. Jede Längsseite ist über je eine Federung, vorzugsweise eine Blattfeder, mit dem Schlitten verbunden. Die Federung kann dadurch die Verbindung der beiden Schlittenteile übernehmen.

Die vorzugsweise aus zwei Deichselstangen gebildete Deichsel ist bevorzugt lösbar am Fahrgestell befestigt und kann beim Transport dann neben die gefaltete bzw. zusammengeklappte Kutsche im Pferdeanhänger untergebracht werden.

Mit Hilfe einer Zeichnung sollen Ausführungsbeispiele der Erfindung näher beschrieben werden.

Es zeigen:
- Figur 1a -: die perspektivische Ansicht einer zweiachsigen Kutsche vom Typ Buggy;
- Figur 1b -: die Vorderachse mit der Deichsel in perspektivischer Teildarstellung;
- Figur 1c -: das Fahrgestell in perspektivischer Darstellung;
- Figur 1d -: die Darstellung nach Figur 1c bei Kurvenfahrt;
- Figur 1e -: das teilweise gefaltete Fahrgestell;
- Figur 1f -: das gefaltete Fahrgestell;
- Figur 1g -: einen Teil einer Achse;
- Figur 1h -: eine perspektivische Darstellung des Aufbaus;
- Figur 1i -: die Darstellung nach Figur 1h zu Beginn der Faltung;
- Figur 1j -: die gefaltete Kutsche;
- Figur 2a -: die perspektivische Ansicht einer nicht erfindungsgemäßen einachsigen Kutsche vom Typ Gig;
- Figur 2b -: die Kutsche nach Figur 2a mit hochgeklapptem vorderen Teil des Aufbaus;
- Figur 2c -: die Kutsche nach Figur 2b mit vollständig hochgeklapptem Vorderteil;
- Figur 2d -: eine Teilansicht gemäß Sichtpfeil IId nach Figur 2c;
- Figur 2e -: die Ansicht gemäß Sichtpfeil IIe nach Figur 2f;
- Figur 2f -: die Ansicht gemäß Sichtpfeil IIf nach Figur 2e;
- Figur 3a -: die Unteransicht auf die Kutsche nach Figur 2 in einer ersten Ausführungsform;
- Figur 3b -: die Ansicht nach Figur 3a zu Beginn der Schwenkbewegung der Räder;
- Figur 3c -: die Darstellung nach Figur 3a mit vollständig verschwenkten Rädern;
- Figur 3d -: die Darstellung nach Figur 2b ohne Gehäuseabdeckung;
- Figur 4a -: die Unteransicht auf die Kutsche nach Figur 3 bei einem zweiten Ausführungsbeispiel;
- Figur 4b -: die Ansicht nach Figur 4a zu Beginn der Schwenkbewegung der Räder;

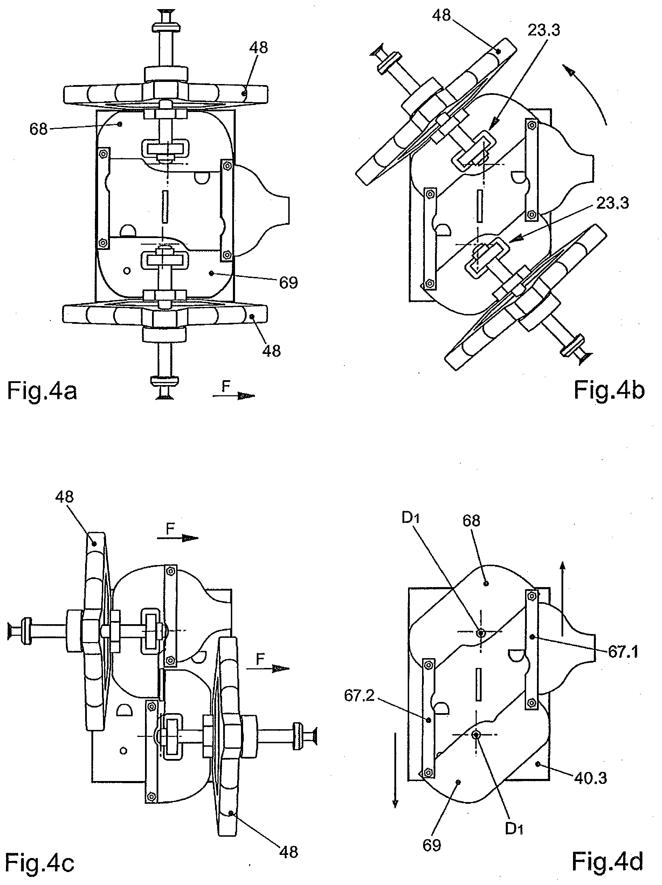

- Figur 4.c -: die Darstellung nach Figur 4.a mit vollständig verschwenkten Rädern;
- Figur 4d -: die Darstellung nach Figur 4b ohne Lenker und Räder.

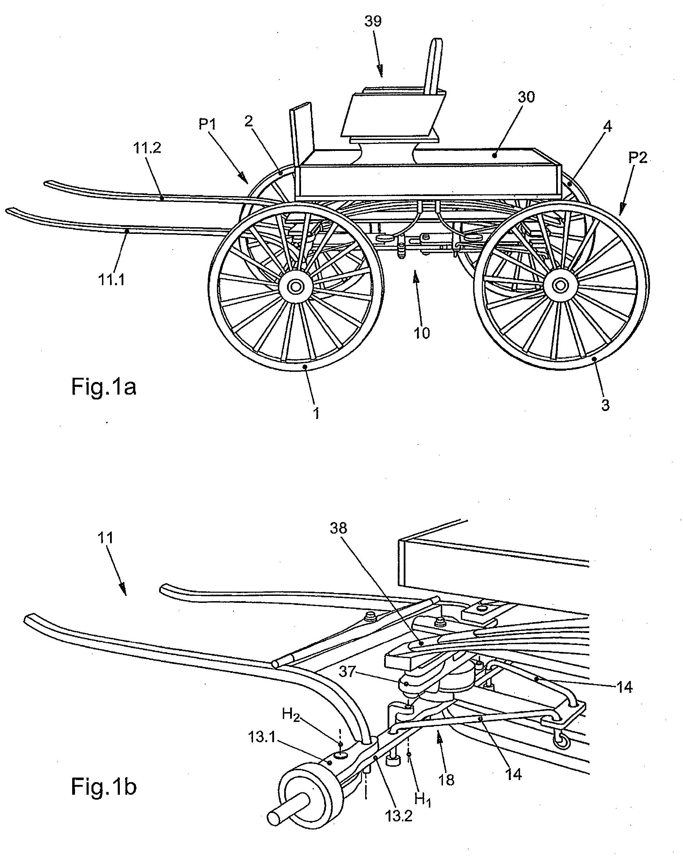

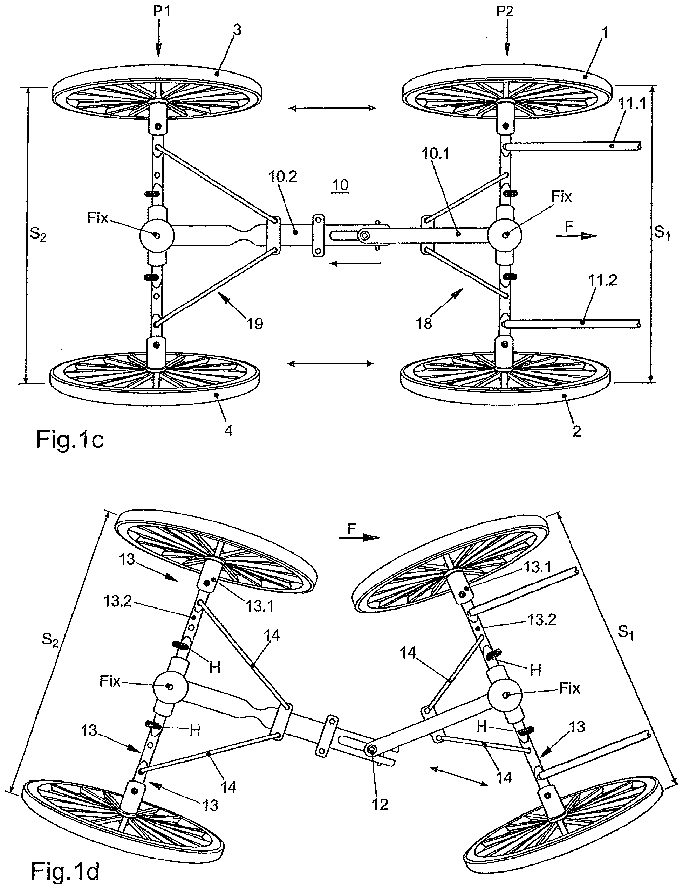

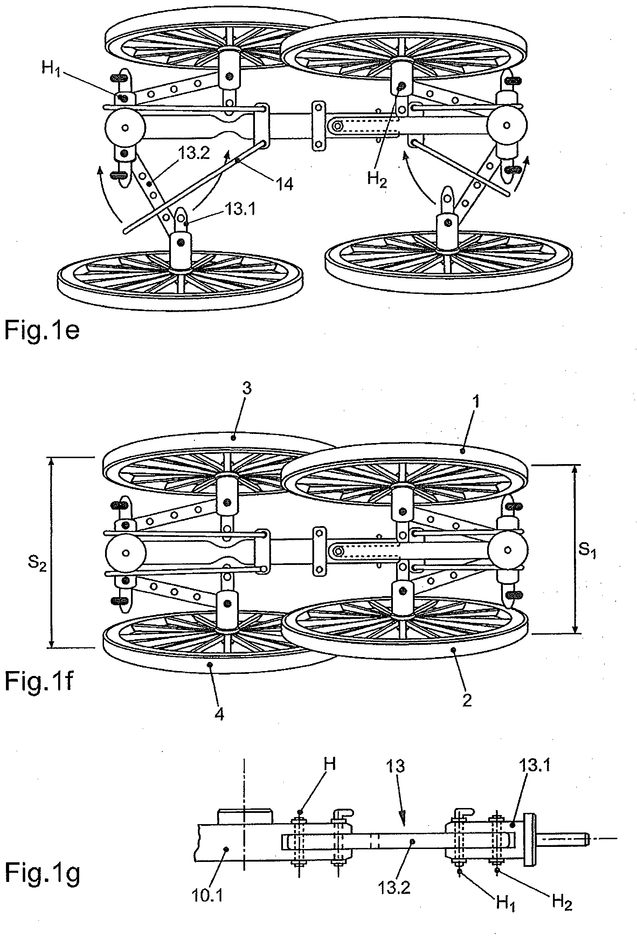

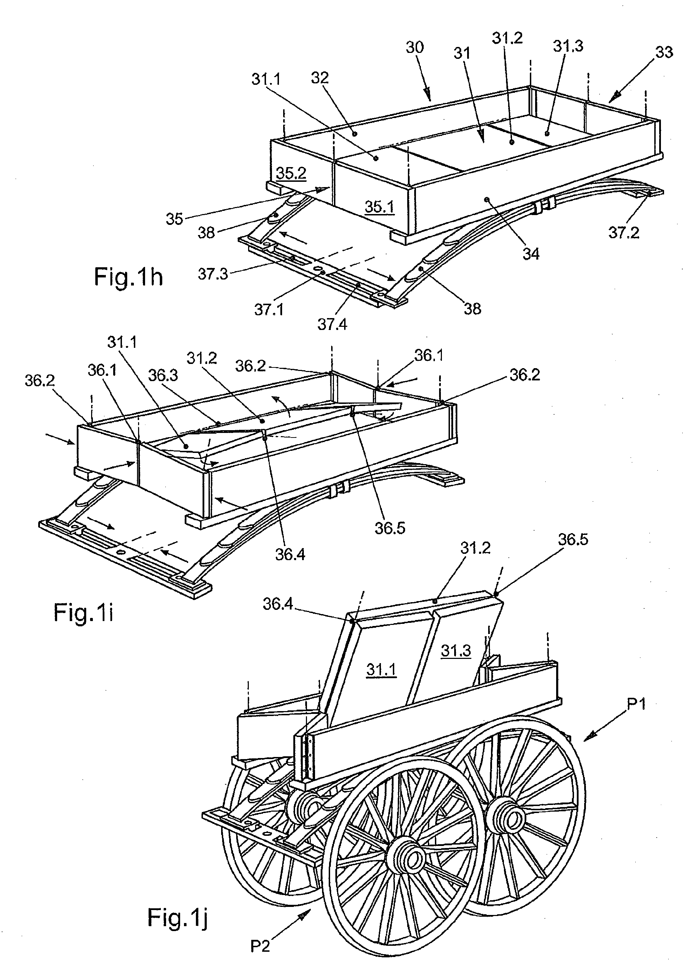

Anhand der Figuren 1a bis 1j soll zunächst eine erfindungsgemäße Kutsche vom Typ Buggy, die faltbar bzw. klappbar ausgebildet ist, beschrieben werden. Die Kutsche besteht aus einem Fahrgestell 10 mit zwei Paar P₁, P₂ Rädern 1, 2, die an einer Vorderachse 18 bzw. an einer Hinterachse 19 drehbar gelagert sind. An der Vorderachse 18 ist eine Deichsel 11 mit zwei Deichselstangen 11.1, 11.2 befestigt. Über zwei Blattfedern 38 ist der Aufbau 30 auf dem Fahrgestell 10 befestigt. Die Räder 1, 2 sind an der Vorderachse 18 in einer ersten Spurweite S₁ und die Räder 3, 4 an der Hinterachse 19 in einer zweiten Spurweite S₂ zueinander beabstandet angeordnet. Das Fahrgestell 10 besteht aus einem vorderen Teil 10.1 und einem hinteren Teil 10.2. Über ein Gelenk 12 sind die beiden Teile 10.1, 10.2 zueinander verschwenkbar verbunden. Wird das Gelenk 12 gelöst, können der vordere Teil 10.1 und der hintere Teil 10.2 relativ zueinander verschoben werden, sodass das Fahrgestell 10 teleskopierbar ausgebildet ist. Die Vorderachse 18 und die Hinterachse 19 sind an sich identisch ausgebildet. Die Räder 1, 2, 3, 4 sind jeweils an einem Lenker 13 drehbar gelagert, der um eine Hochachse H₁ gegenüber dem Fahrgestell 10 verschwenkbar mit dem vorderen Fahrgestellteil 10.1 bzw. hinteren Fahrgestellteil 10.2 befestigt ist. Jeder Lenker 13 besteht aus den beiden Lenkerteilen 13.1 und 13.2. Die Lenkerteile 13.1, 13.2 sind um eine Hochachse H₂ zueinander verschwenkbar. Über je einen lösbaren Querlenker 14 werden die Lenker 13 gegenüber dem Fahrgestell 10 gesichert, sodass sie nicht ungewollt verschwenken können. Die Querlenker 14 können gegenüber dem Lenker 13 bzw. dem Fahrwerk 10 durch eine Verschraubung oder eine Versplintung (vgl. Figur 1b) gesichert sein.

Der Aufbau 30 besteht aus einem Boden 31, zwei Längsseiten 32, 34 und zwei Querseiten 33, 35. Die Querseiten 33, 35 bestehen aus zwei über ein erstes Scharnier 36.1 verbundenen Hälften 33.1, 33.2; 35.1, 35.2. Über ein zweites Scharnier 36.2 ist jede der Hälften 33.1, 33.2; 35.1, 35.2 mit einer der Längsseiten 32, 34 schwenkbar verbunden. Der Boden 30 ist dreiteilig ausgebildet und besteht aus dem mittleren Teil 31.2, das über ein drittes Scharnier 36.3 schwenkbar an der Längsseite 32 angeordnet ist. Das vordere Bodenteil 31.1 ist über ein viertes Scharnier 36.4 am mittleren Bodenteil 31.2 schwenkbar angeordnet und das hintere Bodenteil 31.3 ist über ein fünftes Scharnier 36.5 schwenkbar am mittleren Bodenteil 31.2 angeordnet. Auf dem Aufbau 30 ist ein Kutschbock 39 lösbar befestigt. Der Aufbau 30 ist auf zwei Blattfedern 38 aufgesetzt und mit diesen befestigt. Die beiden Enden der Blattfedern 38 laufen in einem Schlitten 37, der aus zwei Schienen 37.1 und 37.2 besteht. Die Schiene 37.1 ist mit dem vorderen Teil 10.1 des Fahrgestells 10 und die Schiene 37.2 mit dem hinteren Teil 10.2 des Fahrgestells 10 verbunden. In ihrer Längserstreckung sind die Schienen 37.1, 37.2 mit zwei Schlitzen 37.3, 37.4 versehen, in denen die Blattfedern 38 geführt gleiten können.

Der Faltvorgang der Kutsche erfolgt folgendermaßen:
Zunächst werden die Deichselstangen 11.1, 11.2 der Deichsel 11 von dem vorderen Fahrgestell 10.1 abgenommen und mindestens einer der Schlitten 37.1, 37.2 vom Fahrgestell 10 gelöst werden. Dann wird das Gelenk 12 gelöst und der vordere Teil 10.1 und der hintere Teil 10.2 des Fahrgestells 10 können dann aufeinander zugeschoben werden (vgl. Figur 1c). Die Querlenker 14 werden von den Lenkern 13 gelöst und die Verbindung zwischen den Lenkerteilen 13.1 und 13.2 wird ebenfalls gelöst (vgl. Figur 1e). Sodann wird der Boden 31 des Aufbaus 30 hochgeschwenkt und die Bodenteile 31.1, 31.3 von unten gegen das mittlere Bodenteil 31.2 angelegt. Durch Aufbringen seitlicher Kräfte auf die Räder werden die Lenkerteile 13.2 um die Hochachse H₁ gegen das Fahrgestell 10 verschwenkt. Die Lenker 13.1 werden dabei um die Hochachse H₂ in die entgegengesetzte Richtung wie die Lenker 13.2 verschwenkt, sodass die Räder 1, 2, 3, 4 parallel zum Fahrgestell 10 liegen. Die Querseiten 33, 35 werden nach innen in den Aufbau 30 hineingedrückt, sodass sich die Hälften 33.1, 33.2; 35.1, 35.2 um das erste Gelenk 36.1 verschwenken. Gleichzeitig gleiten die Blattfedern 38 in den Schlitzen 37.3, 37.4 des Schlittens 37 bzw. der Schienen 37.1, 37.2. In der endgültig gefalteten Position nimmt die Kutsche die in Figur 1j dargestellte Form an und ist so in ihrem Raumbedarf minimiert. Die Spurweite S₁ der Vorderachse ist kleiner als die Spurweite S₂ an der Hinterachse eingestellt worden, was durch eine entsprechende Länge der Lenker 13.1 realisiert wird. Dadurch kann beim Ineinanderschieben der Fahrgestellteile 10.1, 10.2 die Vorderachse zwischen die Hinterachse geschoben werden, sodass die Räder 1, 2, 3, 4 vollständig innerhalb des vom Aufbau 30 eingenommenen Längsraumes untergebracht werden können, sodass die Kutsche sowohl in der Breite als auch in der Länge minimiert ist, um in einen Pferdetransportanhänger eingeschoben zu werden.

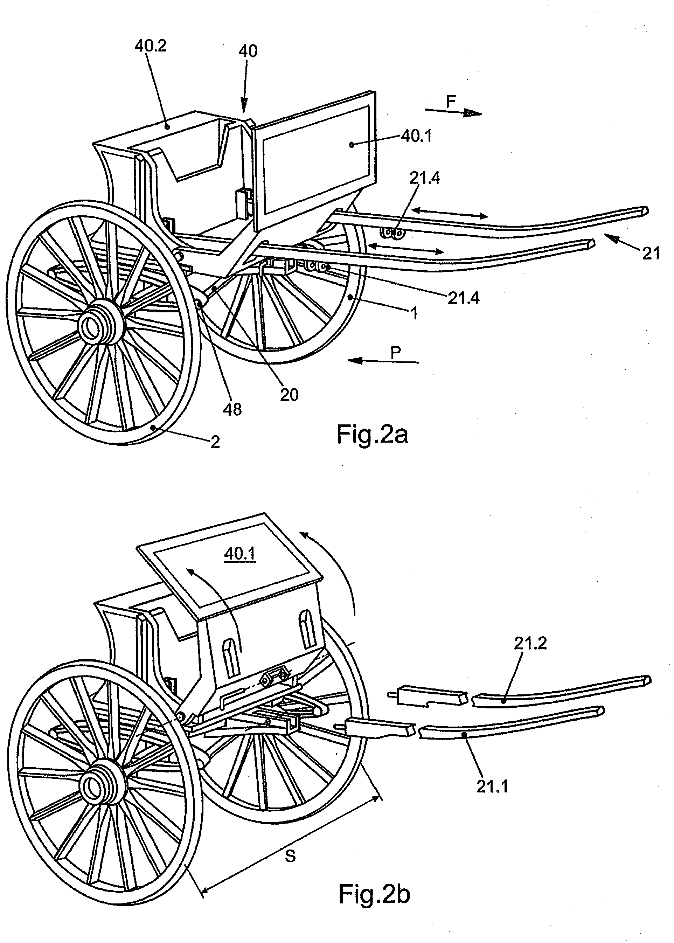

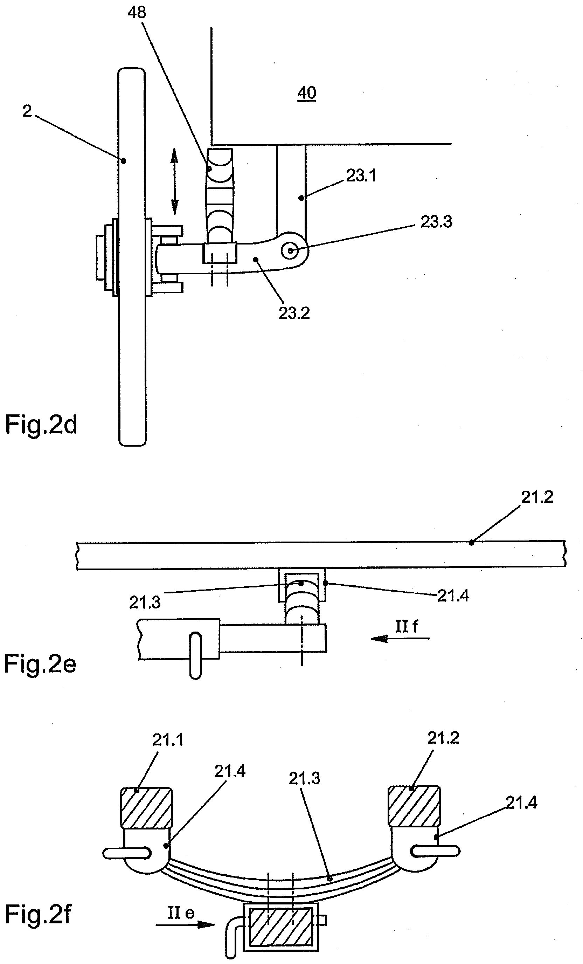

Anhand der Figuren 2a bis 4d eine nicht erfindungsgemäße Kutsche vom Typ Gig beschrieben werden. Die zum Buggy beschriebenen Bauteile, die dieselbe Funktion übernehmen, sind der Einfachheit halber mit gleichen Bezugsziffern versehen.

Der Gig besteht aus dem Aufbau 40, der über Blattfedern 48 auf dem Fahrgestell 20 befestigt ist. Am Fahrgestell 20 oder am Aufbau 40 ist eine aus zwei Deichselstangen 21.1, 21.2 bestehende Deichsel 21 lösbar befestigt. Zwischen den beiden Deichselstangen (21.2, 21.2) ist eine Blattfeder (21.3) vorgesehen. Hierzu sind an den Deichselstangen (21.1, 21.2) Aufnahmen (21.2) vorgesehen.

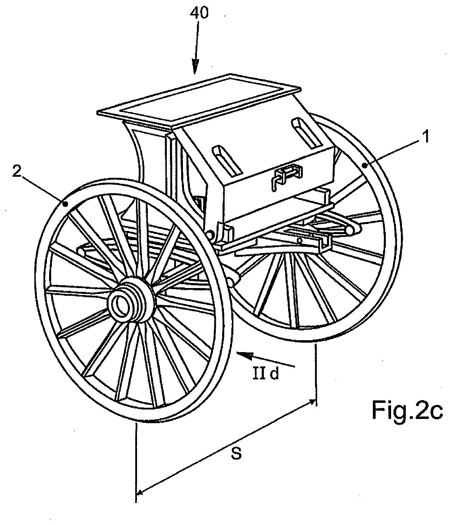

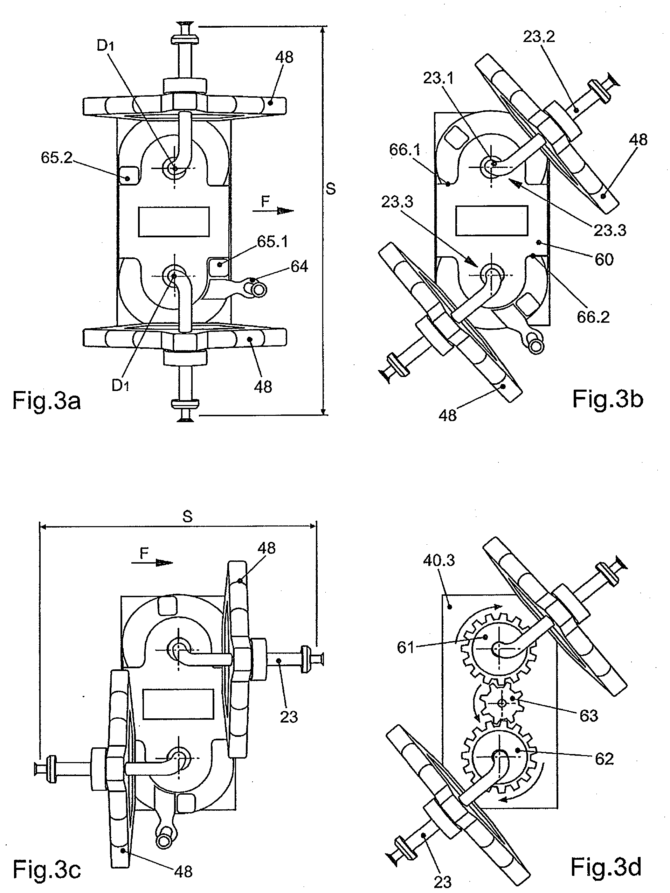

Der Aufbau ist zweiteilig und besteht aus dem vorderen Teil 40.1 und dem hinteren Teil 40.2 die zueinander verschwenkbar verbunden sind, sodass der vordere Teil 40.1 gegen den hinteren Teil 40.2 geschwenkt und auf den hinteren Teil 40.2 aufgelegt werden kann (vgl. Figuren 2b, 2c). Die Räder 1, 2 sind an je einem gekröpften Lenker 23 drehbar gelagert. Der Lenker 23 trägt auch die Blattfedern 48. Wie Figuren 3a bis 3d entnehmbar ist, ist der gekröpfte Lenker 23 in der Seitenansicht L-förmig ausgebildet, wobei der kürzere, im Wesentlichen vertikal angeordnete Schenkel 23.1 mit einem verschwenkbaren Getriebeglied 61 bzw. 62 verbunden ist und die beiden Schenkel (23.1, 23.2) über ein Gelenk (23.3) miteinander verbunden sind. Bei dem in den Figuren 3 gezeigten Ausführungsbeispiel sind die Getriebeglieder 61, 62 als Zahnräder ausgebildet, die über ein drittes Zahnrad 63 miteinander gekoppelt sind. Die Zahnräder 61, 62, 63 sind an der Unterseite 40.3 des Aufbaus 40 drehbar gelagert und werden von einer Abdeckung 60 abgedeckt und so vor Verschmutzung geschützt. Die Abdeckung 64 ist mehrteilig und weist Anschläge 66.1, 66.2 auf, die mit mit den Zahnrändern 61, 62 gekoppelten Zapfen 65.1, 65.2 zusammenwirken.

Figur 3a zeigt die Anordnung der gekröpften Lenker 23 in Fahrtstellung der Kutsche. Die Räder 1, 2 sind von den im Wesentlichen horizontal angeordneten Schenkeln 23.2 entfernt. Die Blattfedern 48 sind in Fahrtrichtung F ausgerichtet und zwischen dem Schenkel 23.2 und dem Aufbau 40 angeordnet. Die Zapfen 65.1, 65.2 liegen an den Anschlägen 66.1, 66.2 an. Über den Hebel 69 kann der mit dem Zahnrad 62 verbundene Lenker 23 im Uhrzeigersinn verschwenkt werden. Durch die Kopplung der Zahnräder 61, 62, 63, dreht sich der gegenüberliegende Lenker 23 entsprechend im Uhrzeigersinn mit, bis beide Lenker 23 um 90° verdreht sind. Die Blattfedern 548 stehen dann im rechten Winkel zur Fahrtrichtung F (vgl. Figur 3c).

An Stelle von Zahnrädern können die Getriebeglieder 61, 62 auch als Scheiben ausgebildet sein, wie das in Figuren 4a bis 4d abgebildete Ausführungsbeispiel zeigt. Die Scheiben 68.1, 68.2 sind um einen Drehpunkt D₁, D₂ drehbar an der Unterseite 40.3 des Aufbaus 40 gelagert und über zwei parallel zueinander angeordnete Lenker 67.1, 67.2 miteinander gekoppelt. Wird eine der Scheiben 68, 69 im Uhrzeigersinn verschwenkt, schwenkt die andere Scheibe 69, 68 entsprechend mit, sodass die Blattfedern 48, die in Figur 4a in Fahrtrichtung F ausgerichtet sind, die in Figur 4c dargestellte quer zur Fahrtrichtung F gerichtete Stellung einnehmen können.

Wie ein Vergleich der Figuren 3a und 3c bzw. 4a und 4c zeigt, ist der parallele Abstand der Blattfedern 48 und damit auch die Spurweite S zwischen den Rädern 1, 2 nach dem Verschwenken kleiner.

Der Klappvorgang der Kutsche läuft wie folgt ab. Zunächst wird die Deichsel 21 vom Aufbau 40 gelöst. Dann wird der vordere Teil 40.1 des Aufbaus 40 nach oben geschwenkt (Figur 2b) und auf den hinteren Teil 40.2 des Aufbaus 40 aufgelegt. Anschließend werden die Lenker 23 gegen den Uhrzeigersinn verschwenkt (vgl. Figur 3b), sodass die Räder 1, 2, die in Figur 2b in Fahrtrichtung F zeigen, an der in Fahrtrichtung F vorderen bzw. hinteren Seite des Aufbaus 40 anliegen (vgl. Figuren 3c, 4c). In diesem geklappten Zustand kann der Gig in ein Abteil eines Pferdeanhängers eingeschoben werden.

### Bezugszeichenliste

- 1: Rad
- 2: Rad
- 3: Rad
- 4: Rad
- 10: Fahrgestell
- 10.1: vorderer Teil
- 10.2: hinterer Teil
- 11: Deichsel
- 11.1: Stange
- 11.2: Stange
- 12: Gelenk
- 13: Lenker
- 13.1: Lenkerteil
- 13.2: Lenkerteil
- 14: Querlenker
- 18: Vorderachse
- 19: Hinterachse
- 20: Fahrgestell
- 21: Deichsel
- 21.1: Deichselstange
- 21.2: Deichselstange
- 21.3: Feder/Blattfeder
- 21.4: Federaufnahme
- 23: Lenker
- 23.1: Schenkel
- 23.2: Schenkel
- 23.3: Gelenk
- 30: Aufbau
- 31: Boden
- 31.1: vorderes Bodenteil
- 31.2: mittleres Bodenteil
- 31.3: hinteres Bodenteil
- 32: Längsseite
- 33: Querseite
- 33.1: Hälfte
- 33.2: Hälfte
- 34: Längsseite
- 35: Querseite
- 35.1: Hälfte
- 35.2: Hälfte
- 36.1: erstes Scharnier
- 36.2: zweites Scharnier
- 36.3: drittes Scharnier
- 36.4: viertes Scharnier
- 36.5: fünftes Scharnier
- 37: Schlitten
- 37.1: Schiene/Schlittenteil
- 37.2: Schiene/Schlittenteil
- 37.3: Schlitz
- 37.4: Schlitz
- 38: Blattfeder
- 39: Kutschbock
- 40: Aufbau
- 40.1: vorderes Teil/Aufbauteil
- 40.2: hinteres Teil/Aufbauteil
- 40.3: Unterseite
- 48: Blattfeder/Feder
- 60: Gehäuseabdeckung
- 61: Getriebeglied/Zahnrad
- 62: Getriebeglied/Zahnrad
- 63: Zahnrad
- 64: Hebel
- 65.1: Zapfen
- 65.2: Zapfen
- 66.1: Anschlag
- 66.2: Anschlag
- 67.1: Lenker
- 67.2: Lenker
- 68: Scheibe
- 69: Scheibe
- D₁: Drehachse
- D₂: Drehachse
- F: Fahrtrichtung
- H: Hochachse
- H₁: Hochachse
- H₂: Hochachse
- P: Paar
- P₁: Paar
- P₂: Paar
- S: Spurweite
- S₁: Spurweite
- S₂: Spurweite

## Patentansprüche

1. Kutsche mit einem Fahrgestell (10, 20), einem Aufbau (30, 40), einer Deichsel (11, 21) und zwei Paar (P₁, P₂) am Fahrgestell (10, 20) angeordneter Räder (1, 2, 3, 4), die jeweils in einer Spurweite (S₁, S₂) zueinander beabstandet sind, **dadurch gekennzeichnet, dass** die Spurweiten (S₁, S₂) der Räder (1, 2, 3, 4) zum Transport der Kutsche verkleinerbar und unterschiedlich groß einstellbar sind und dass das Fahrgestell (10) mehrteilig, insbesondere zweiteilig, und in Fahrtrichtung (F) teleskopierbar ausgestaltet ist.

2. Kutsche nach Anspruch 1, **dadurch gekennzeichnet, dass** jedes Rad (1, 2, 3, 4) an je einem Lenker (13) drehbar gelagert ist, der um jeweils eine Hochachse (H₁) schwenkbar am Fahrgestell (10) befestigt ist.

3. Kutsche nach Anspruch 1, **dadurch gekennzeichnet, dass** das erste Paar (P₁) Räder (1, 2) an einem vorderen Teil (10.1) des Fahrgestells (10) und das zweite Paar (P₂) Räder (3, 4) an einem hinteren Teil (10.2) des Fahrgestells (10) angeordnet ist.

4. Kutsche nach Anspruch 2, **dadurch gekennzeichnet, dass** jeder Lenker (13) zusätzlich über einen lösbaren Querlenker (14) mit dem Fahrgestell (10, 10.1, 10.2) verbunden ist.

5. Kutsche nach einem der vorstehenden Ansprüche, **dadurch gekennzeichnet, dass** der Aufbau (30) zumindest aus einem Boden (31), zwei Längsseiten (32, 34) sowie zwei Querseiten (33, 35) besteht und die Querseiten (33, 35) aus zwei über ein erstes Scharnier (36.1) verbundenen Hälften (33.1, 33.2; 35.1, 35.2) bestehen und jeweils eine der Hälften (33.1, 33.2; 35.1, 35.2) über ein zweites Scharnier (36.2) schwenkbar mit einer der Längsseiten (32, 34) verbunden ist.

6. Kutsche nach Anspruch 5, **dadurch gekennzeichnet, dass** der Boden (31) aus drei Teilen (31.1, 31.2, 31.3) besteht, von denen ein mittleres Biodenteil (31.2) über ein drittes Scharnier (36.3) schwenkbar mit einer der Längsseiten (32) und ein vorderes Bodenteil (31.1) über ein viertes Scharnier (36.4) mit dem mittleren Bodenteil (31.2) und ein hinteres Bodenteil (31.3) über ein fünftes Scharnier (36.5) mit dem mittleren Bodenteil (31.2) verbunden ist.

7. Kutsche nach Anspruch 6, **dadurch gekennzeichnet, dass** die Fläche des mittleren Bodenteils (31.2) mindestens doppelt so groß ist wie die Fläche des vorderen (31.1) und des hinteren Bodenteils (31.3).

8. Kutsche nach einem der Ansprüche 5 bis 7, **dadurch gekennzeichnet, dass** die Längsseiten (32, 34) entlang eines Schlittens (37) aufeinander zu verschiebbar angeordnet sind.

9. Kutsche nach Anspruch 8, **dadurch gekennzeichnet, dass** der Schlitten (37) zweiteilig ist und ein erster Schlittenteil (37.1) mit dem vorderen Teil (10.1) des Fahrgestells (10) und der zweite Schlittenteil (37.2) mit dem hinteren Teil (10.2) des Fahrgestells verbunden ist.

10. Kutsche nach Anspruch 8 oder 9, **dadurch gekennzeichnet, dass** jede Längsseite (32, 34) über je eine Federung, vorzugsweise eine Blattfeder (38, 48), mit dem Schlitten (37) verbunden ist.

11. Kutsche nach einem der vorstehenden Ansprüche, **dadurch gekennzeichnet, dass** die Deichsel (11) lösbar am Fahrgestell (10, 20) angeordnet ist.

## Claims

1. Carriage having a chassis (10, 20), a body (30, 40), a drawbar (11, 21) and two pairs (P₁, P₂) of wheels (1, 2, 3, 4) arranged on the chassis (10, 20), which are each spaced apart from one another by a track width (S₁, S₂), **characterized in that** the track widths (S₁, S₂) of the wheels (1, 2, 3, 4) are able to be reduced for transporting the carriage and are settable to different sizes, and **in that** the chassis (10) is configured in a multipart, in particular two-part, manner and in a telescopic manner in the direction of travel (F).

2. Carriage according to Claim 1, **characterized in that** each wheel (1, 2, 3, 4) is mounted in a rotatable manner on a respective link (13), which is fastened to the chassis (10) so as to be pivotable about a respective vertical axis (H₁).

3. Carriage according to Claim 1, **characterized in that** the first pair (P₁) of wheels (1, 2) is arranged on a front part (10.1) of the chassis (10) and the second pair (P₂) of wheels (3, 4) is arranged on a rear part (10.2) of the chassis (10).

4. Carriage according to Claim 2, **characterized in that** each link (13) is additionally connected to the chassis (10, 10.1, 10.2) via a detachable transverse link (14).

5. Carriage according to one of the preceding claims, **characterized in that** the body (30) consists of a floor (31), two longitudinal sides (32, 34) and two transverse sides (33, 35), and the transverse sides (33, 35) consist of two halves (33.1, 33.2; 35.1, 35.2) connected via a first hinge (36.1), and in each case one of the halves (33.1, 33.2; 35.1, 35.2) is connected to one of the longitudinal sides (32, 34) in a pivotable manner via a second hinge (36.2).

6. Carriage according to Claim 5, **characterized in that** the floor (31) consists of three parts (31.1, 31.2, 31.3), of which a middle floor part (31.2) is connected to one of the longitudinal sides (32) in a pivotable manner via a third hinge (36.3), and a front floor part (31.1) is connected to the middle floor part (31.2) via a fourth hinge (36.4), and a rear floor part (31.3) is connected to the middle floor part (31.2) via a fifth hinge (36.5).

7. Carriage according to Claim 6, **characterized in that** the area of the middle floor part (31.2) is at least twice the area of the front (31.1) and of the rear floor part (31.3).

8. Carriage according to one of Claims 5 to 7, **characterized in that** the longitudinal sides (32, 34) are arranged so as to be displaceable towards one another along a slide (37).

9. Carriage according to Claim 8, **characterized in that** the slide (37) is in two parts, and a first slide part (37.1) is connected to the front part (10.1) of the chassis (10), and the second slide part (37.2) is connected to the rear part (10.2) of the chassis.

10. Carriage according to Claim 8 or 9, **characterized in that** each longitudinal side (32, 34) is connected to the slide (37) via a respective suspension, preferably a leaf spring (38, 48).

11. Carriage according to one of the preceding claims, **characterized in that** the drawbar (11) is arranged in a detachable manner on the chassis (10, 20).

## Revendications

1. Calèche comportant un châssis (10, 20), une superstructure (30, 40), un timon (11, 21) et deux paires (P₁, P₂) de roues (1, 2, 3, 4) qui sont disposées sur le châssis (10, 20) et qui sont espacées les unes des autres par un écartement respectif (S₁, S₂),
**caractérisée en ce que**
les écartements (S₁, S₂) des roues (1, 2, 3, 4) peuvent être réduits à des fins de transport de la calèche et peuvent être réglés à différentes tailles, et **en ce que**
le châssis (10) est conçu en plusieurs parties, en particulier en deux parties, et de façon télescopique en direction de déplacement (F).

2. Calèche selon la revendication 1,
**caractérisée en ce que**
chaque roue (1, 2, 3, 4) est montée mobile en rotation sur un bras respectif (13) qui est fixé sur le châssis (10) de façon mobile en pivotement autour d'un axe vertical (H₁).

3. Calèche selon la revendication 1,
**caractérisée en ce que**
la première paire (P₁) de roues (1, 2) est disposée sur une partie avant (10.1) du châssis (10), et la seconde paire (P₂) de roues (3, 4) est disposée sur une partie arrière (10.2) du châssis (10).

4. Calèche selon la revendication 2,
**caractérisée en ce que**
chaque bras (13) est relié au châssis (10, 10.1, 10.2) en supplément par un bras transversal amovible (14).

5. Calèche selon l'une des revendications précédentes,
**caractérisée en ce que**
la superstructure (30) est constituée par au moins un fond (31), deux faces longitudinales (32, 34) et deux faces transversales (33, 35), et
les faces transversales (33, 35) sont constituées par deux moitiés (33.1, 33.2 ; 35.1, 35.2) reliées par une première charnière (36.1), et
l'une des moitiés (33.1, 33.2 ; 35.1, 35.2) est reliée respectivement à l'une des faces longitudinales (32, 34) de façon mobile en pivotement par une seconde charnière (36.2).

6. Calèche selon la revendication 5,
**caractérisée en ce que**
le fond (31) est constitué de trois parties (31.1, 31.2, 31.3) dont une partie de fond centrale (31.2) est reliée à l'une des faces longitudinales (32) de façon mobile en pivotement par une troisième charnière (36.3), et dont une partie de fond avant (31.1) est reliée à la partie de fond centrale (31.2) par une quatrième charnière (36.4), et une partie de fond arrière (31.3) est reliée à la partie de fond centrale (31.2) par une cinquième charnière (36.5).

7. Calèche selon la revendication 6,
**caractérisée en ce que**
la surface de la partie de fond centrale (31.2) est au moins du double de la surface de la partie de fond avant (31.1) et arrière (31.3).

8. Calèche selon l'une des revendications 5 à 7,
**caractérisée en ce que**
les faces longitudinales (32, 34) sont disposées de manière à pouvoir être approchées l'une de l'autre le long d'un chariot (37).

9. Calèche selon la revendication 8,
**caractérisée en ce que**
le chariot (37) est réalisé en deux parties, et une première partie de chariot (37.1) est reliée à la partie avant (10.1) du châssis (10) et la seconde partie de chariot (37.2) est reliée à la partie arrière (10.2) du châssis.

10. Calèche selon la revendication 8 ou 9,
**caractérisée en ce que**
chaque face longitudinale (32, 34) est reliée au chariot (37) par un ressort respectif, de préférence par un ressort à lame (38, 48).

11. Calèche selon l'une des revendications précédentes,
**caractérisée en ce que**
le timon (11) est disposé de façon amovible sur le châssis (10, 20).
